Europäisches Patentamt

European Patent Office

Office européen des brevets

(11) Veröffentlichungsnummer: **0 533 980 A1**

## EUROPÄISCHE PATENTANMELDUNG

(21) Anmeldenummer: **91116461.4**

(22) Anmeldetag: **26.09.91**

(51) Int. Cl.5: **G01N 29/02**

(43) Veröffentlichungstag der Anmeldung:
**31.03.93 Patentblatt 93/13**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Màgori, Valentin, Dipl.-Ing.**
**Limburgstrasse 17**
**W-8000 München 90(DE)**

(54) Verfahren zur Bestimmung der Konzentration von Kraftstoffen oder Gasen in Luft.

(57) Ein Verfahren zur Bestimmung der Konzentration von Kraftstoffen oder Gasen in Luft, insbesondere in der Ansaugluft von Kfz-Motoren, mittels Ultraschall- (US-) Messung, bei dem ein zu bestimmendes Luft/Dampf-Gemisch durch eine US-Meßstrecke bekannter Länge geleitet und die von der Gemischzusammensetzung abhängige Schallgeschwindigkeit durch das Luft/Dampf-Gemisch ermittelt wird.

US – LMM Kennlinie

Schallgeschwindigkeit (m/s) vs. Konzentration

□ 20 C  + -40 C  ◇ 60 C

Die vorliegende Erfindung betrifft ein Verfahren zur Bestimmung der Konzentration von Kraftstoffen oder Gasen in Luft, insbesondere in der Ansaugluft von Kfz-Motoren, mittels Ultraschall- (US-) Messung. Sie betrifft außerdem eine Vorrichtung zur Durchführung des Verfahrens.

Kfz-Kraftstoff-Tanks werden neuerdings mit Aktivkohle-Filtern ausgestattet, die die Krafstoffdämpfe binden und so verhindern sollen, daß diese in die Atmosphäre entweichen. Bei der Regeneration der Filter werden die dort gebundenen Kraftstoffdämpfe der Ansaugluft des Motors zugeleitet und anschließend im Motor verbrannt. Zur optimalen Vorsteuerung eines vorgegebenen Luft/Kraftstoff-Verhältnisses ist es notwendig, den Anteil des der Ansaugluft aus dem Aktivkohle-Filter zugeführten Kraftstoffes zu berücksichtigen. Dazu wäre ein Sensor für die Konzentration des Kraftstoffdampfes in der Ansaugluft zweckmäßig.

Bisherige Vorschläge oder Lösungsansätze zur Bestimmung des Luft/Kraftstoff-Verhältnisses gehen von sog. Chemo-Sensoren aus.

Der vorliegenden Erfindung liegt die Aufgabe zugrunde, ein neuartiges Verfahren zur Bestimmung der Konzentration von Kraftstoffen oder Gasen in Luft, insbesondere in der Ansaugluft von Kfz-Motoren, mittels Ultraschall- (US-) Messung, das schnell und zuverlässig arbeitet, sowie eine einfache und kostengünstige Vorrichtung zur Durchführung des Verfahrens zu schaffen.

Zur Lösung dieser Aufgabe wird ein Verfahren der eingangs genannten Art und gemäß den Merkmalen des Patentanspruchs 1 vorgeschlagen. Außerdem werden zur Lösung der Aufgabe verschiedene Ausführungsformen einer Vorrichtung zur Durchführung des Verfahrens vorgeschlagen.

Vorteilhafte Weiterbildungen der Erfindung sind durch die in den Unteransprüchen angegebenen Merkmale gekennzeichnet.

Erfindungsgemäß wird die genannte Aufgabe durch Auswertung der Schallgeschwindigkeit gelöst. Diese kann auf besonders vorteilhafte Weise aus den (mittleren) Laufzeiten oder Empfangsphasen (oder deren Reziprokwerten) in Ultraschall-Luftmassenmessern ausgewertet werden. Verschiedene Kraftstoffzusammensetzungen können aus dem zeitlichen Verlauf der gemessenen Schallgeschwindigkeit abgeschätzt werden, die sich nach einem Hindernis (z. B. Aktivkohle-Filter) ergibt.

Das erfindungsgemäße Verfahren erlaubt es auf einfache und zuverlässige Weise, beispielsweise die Wirksamkeit von Aktivkohle-Filtern zu überwachen oder die Benzindampfkonzentration bei der Kraftstoffzumessung zu berücksichtigen.

Im folgenden wird die Erfindung im einzelnen beschrieben.

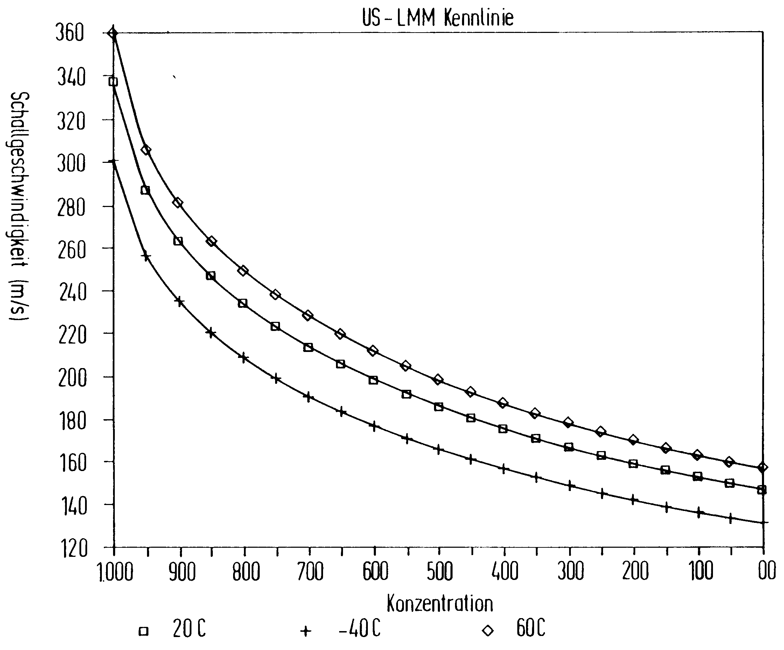

Die Figur zeigt ein Diagramm, das die Zusammenhänge zwischen Dampfkonzentration und Schallgeschwindigkeit bei verschiedenen Temperaturen angibt.

Die vorliegende Erfindung besteht darin, zur Bestimmung der Krafstoffdampfkonzentration in der Ansaugluft die Schallgeschwindigkeit c des Luft/Dampf-Gemisches zu messen und auszuwerten. Die Schallgeschwindigkeit eines gasförmigen Mediums hängt im wesentlichen vom Molekulargewicht und der Temperatur ab:

$$c = \sqrt{R{*}T{*}X/M}$$

Dabei bedeuten

X: Verhältnis der spez. Wärmen
R: allgemeine Gaskonstante
T: Temperatur (in K)
M: Molekulargewicht

In Gasgemischen hängt die Schallgeschwindigkeit außer vom Molekulargewicht und der Temperatur vom Mischungsverhältnis der Komponenten ab. Im Falle von zwei Komponenten gilt:

$$c = \sqrt{\frac{RT}{x{*}M1+(1-x){*}M2} \cdot \frac{x{*}cp1+(1-x){*}cp2}{x{*}cv1+(1-x){*}cv2}}$$

Dabei bedeuten
x: Mischungsverhältnis
cp1, cv1: spez. Wärmen der Komponente 1
cp2, cv2: spez. Wärmen der Komponente 2
M1, M2: Molekulargewicht der Komponente 1 bzw. 2

Zur Bestimmung der Schallgeschwindigkeit ist die Laufzeit an einer Meßstrecke mit bekannter Länge zu ermitteln, an deren jeweiligem Ende ein Ultraschallwandler, zum Senden und Empfangen, angeordnet ist.

Die Meßstrecke kann auch durch die Strecke zwischen einem einzigen Wandler, der zeitlich nacheinander zum Senden und zum Empfangen benutzt wird, und einem oder mehreren Schallreflektoren gebildet werden Zur Bestimmung der Laufzeit oder äquivalenter Größen, aus denen die Schallgeschwindigkeit abgeleitet werden kann, sind unterschiedliche Verfahren einsetzbar, beispielsweise:

- Die direkte Messung der Laufzeit oder des Phasenwinkels zwischen Sende- und Empfangssignal;
- die Messung der "reziproken Laufzeit", sog. "Sing Araound"-Verfahren und dessen Derivate ("Flying Wheel" usw.);
- die Messung des reziproken Phasenwinkels ("Lambda Locked Loop"-Frequenzen), mit Varianten zur eindeutigen Bestimmung des absoluten Wertes des Phasenwinkels (Messung mit unterschiedlichen Ordnungen, "Lambda Set and Lock" usw.);
- die Bestimmung der Phasensteilheit $d\phi/df$ der Meßstrecke, CW-Sonar-Verfahren.

Eine besonders vorteilhafte Ausführung der Erfindung besteht darin, die Schallgeschwindigkeit mit einem eventuell vorhandenen Ultraschall-Luftmassenmesser oder mit einem ultraschallabgetasteten Vortex-Luftmassenmesser in der oben beschriebener Weise zu bestimmen. Dabei kann zur Steigerung der GEnauigkeit eine zeitliche Mittelung durchgeführt werden, oder es kann ein Mittelwert über die Laufzeiten (oder entsprechende Größen, s. oben) gebildet werden. Enventuell störende Einflüsse der Strömungsgeschwindigkeit können theoretisch abgeleitet oder empirisch bestimmt werden und können nach Maßgabe der mit dem Luftmassenmesser bestimmten Strömungsgeschwindigkeit korrigiert werden. Die zur Korrektur von Geschwindigkeitseinflüssen erforderlichen Parameter können auch aus anderen Sensorsignalen (z. B. betreffend den Saugrohrdruck des Kfz-Motors) oder den Betriebsparametern des Kfz-Motors aufgrund empirisch ermittelter Zusammenhänge oder aufgrund von Modellvorstellungen abgeleitet werden.

Eine weitere in Betracht zuziehende Überlegung betrifft die Abschätzung der Zusammensetzung des Kraftstoffdampfes aus dem zeitlichen Verlauf seiner Konzentration unter Berücksichtigung des Luftdurchsatzes, des Saugrohrdrucks, der Temperatur vor, im und nach dem Aktivkohle-Filter. Dabei wird vorausgesetzt, daß verschiedene Komponenten des Kraftstoffes im Filter unterschiedlich stark gebunden werden und unterschiedliche Transportgeschwindigkeiten aufweisen. Diese Zusammenhänge müßten experimentell bestimmt oder aus geeigneten Modellen abgeleitet werden.

Eine weitere in Betracht zu ziehende Überlegung betrifft die Verwendung des Ultraschall-Kraftstoffkonzentrations-Sensors zur Stützung von Gemisch- (Prädikator-) Modellen.

**Patentansprüche**

1. Verfahren zur Bestimmung der Konzentration von Kraftstoffen oder Gasen in Luft, insbesondere in der Ansaugluft von Kfz-Motoren, mittels Ultraschall- (US-) Messung, dadurch **gekennzeichnet,** daß ein zu bestimmendes Luft/Dampf-Gemisch durch eine US-Meßstrecke bekannter Länge geleitet und die von der Gemischzusammensetzung abhängige Schallgeschwindigkeit durch das Luft/Dampf-Gemisch ermittelt wird.

2. Verfahren nach Anspruch 1, dadurch **gekennzeichnet,** daß die Schallgeschwindigkeit durch direkte Messung der Laufzeit zwischen einem US-Sende- und einem US-Empfangssignal ermittelt wird.

3. Verfahren nach Anspruch 1, dadurch **gekennzeichnet,** daß die Schallgeschwindigkeit durch Bewertung des Phasenwinkels zwischen einem US-Sende- und einem US-Empfangssignal ermittelt wird.

4. Verfahren nach Anspruch 1, dadurch **gekennzeichnet,** daß die Schallgeschwindigkeit durch Messung der reziproken Laufzeit zwischen einem US-Sende- und einem US-Empfangssignal ermittelt wird.

5. Verfahren nach Anspruch 1, dadurch **gekennzeichnet,** daß die Schallgeschwindigkeit mit Hilfe des sog. "Sing Around"-Verfahrens ermittelt wird.

6. Verfahren nach Anspruch 1, dadurch **gekennzeichnet,** daß die Schallgeschwindigkeit durch Messung des reziproken Phasenwinkels, vorzugsweise mit Hilfe des sog. "Lambda Locked Loop"-Verfahrens, ermittelt wird.

7. Verfahren nach Anspruch 1, dadurch **gekennzeichnet,** daß die Schallgeschwindigkeit mit Hilfe bestimmter Varianten zur eindeutigen Bestimmung des absoluten Werts des Phasenwinkels zwischen einem US-Sende- und einem US-Empfangssignal ermittelt wird.

**8.** Verfahren nach Anspruch 1, dadurch **gekennzeichnet,** daß die Schallgeschwindigkeit durch Bestimmung der Phasensteilheit $d\phi/df$ der Meßstrecke ermittelt wird.

**9.** Verfahren nach Anspruch 1, dadurch **gekennzeichnet,** daß die Schallgeschwindigkeit mit Hilfe des sog. "CW-Sonarverfahrens ermittelt wird.

**10.** Verfahren nach einem der Ansprüche 2 bis 9, dadurch **gekennzeichnet,** daß zur Korrektur von Geschwindigkeitseinflüssen erforderliche Parameter aus anderen Sensorsignalen, z. B. aus einem Sensor zur Erfassung des Saugrohrdrucks des betreffenden Kfz-Motors, abgeleitet werden.

**11.** Verfahren nach einem der Ansprüche 2 bis 9, dadurch **gekennzeichnet,** daß zur Korrektur von Geschwindigkeitseinflüssen erforderliche Parameter aus den Betriebsparametern des betreffenden Kfz-Motors aufgrund empirisch ermittelter Zusammenhänge abgeleitet werden.

**12.** Verfahren nach einem der Ansprüche 2 bis 9, dadurch **gekennzeichnet,** daß zur Korrektur von Geschwindigkeitseinflüssen erforderliche Parameter aufgrund von Modellvorstellungen des gesamten zu betrachteten Systems abgeleitet werden.

**13.** Verfahren nach einem der Ansprüche 2 bis 9, dadurch **gekennzeichnet,** daß zur Steigerung der Genauigkeit der Messung eine zeitliche Mittelung mehrerer erfaßter Werte durchgeführt wird.

**14.** Verfahren nach einem der Ansprüche 2 bis 9, dadurch **gekennzeichnet,** daß zur Steigerung der Genauigkeit der Messung ein Mittelwert über mehrere Laufzeiten gebildet wird.

**15.** Verfahren nach einem der Ansprüche 2 bis 9, dadurch **gekennzeichnet,** daß störende Einflüsse der Strömungsgeschwindkeit des Luft/Dampf-Gemisches theoretisch abgeleitet oder empirisch bestimmt und zum Zwecke einer Korrektur des Meßergebnisses berücksichtigt werden.

**16.** Vorrichtung zur Durchführung eines Verfahrens zur Bestimmung der Konzentration von Kraftstoffen oder Gasen in Luft, insbesondere in der Ansaugluft von Kfz-Motoren, mittels Ultraschall- (US-) Messung, bei dem ein zu bestimmendes Luft/Dampf-Gemisch durch eine US-Meßstrecke bekannter Länge geleitet und die von der Gemischzusammensetzung abhängige Schallgeschwindigkeit durch das Luft/Dampf-Gemisch ermittelt wird, dadurch **gekennzeichnet,** daß ein US-Sendewandler und ein US-Empfangswandler vorgesehen sind, zwischen denen die US-Meßstrecke angeordnet ist.

**17.** Vorrichtung zur Durchführung eines Verfahrens zur Bestimmung der Konzentration von Kraftstoffen oder Gasen in Luft, insbesondere in der Ansaugluft von Kfz-Motoren, mittels Ultraschall- (US-) Messung, bei dem ein zu bestimmendes Luft/Dampf-Gemisch durch eine US-Meßstrecke bekannter Länge geleitet und die von der Gemischzusammensetzung abhängige Schallgeschwindigkeit durch das Luft/Dampf-Gemisch ermittelt wird, dadurch **gekennzeichnet,** daß ein einziger, abwechselnd als US-Sendewandler und als US-Empfangswandler fungierender Wandler an einem Ende der US-Meßstrecke vorgesehen ist und daß zumindest an dem anderen Ende der US-Meßstrecke zumindest ein Schallreflektor angeordnet ist.

**18.** Vorrichtung zur Durchführung eines Verfahrens zur Bestimmung der Konzentration von Kraftstoffen oder Gasen in Luft, insbesondere in der Ansaugluft von Kfz-Motoren, mittels Ultraschall- (US-) Messung, bei dem ein zu bestimmendes Luft/Dampf-Gemisch durch eine US-Meßstrecke bekannter Länge geleitet und die von der Gemischzusammensetzung abhängige Schallgeschwindigkeit durch das Luft/Dampf-Gemisch ermittelt wird, dadurch **gekennzeichnet,** daß die Meßstrecke Bestandteil eines US-Luftmassenmesser ist.

US – LMM Kennlinie

Europäisches Patentamt

EUROPÄISCHER RECHERCHENBERICHT

Nummer der Anmeldung

EP    91 11 6461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 027 198 (S.S.O.S.) <br> * das ganze Dokument * <br> --- | 1-4,7-16 | G01N29/02 |
| X | WO-A-8 706 703 (VALTION TEKNILLINEN TUTKIMUSKESKUS) <br> * das ganze Dokument * <br> --- | 1,2,4 | |
| A | US-A-4 003 242 (HOUBEN ET AL.) <br> * Spalte 6, Zeile 9 - Spalte 7, Zeile 37; Abbildungen 1,2 * <br> --- | 1-18 | |
| A | DE-A-3 417 734 (BETRUEBSFORSCHUNGINSTITUT) <br> * Zusammenfassung * <br> --- | 1-18 | |
| A | DE-A-2 110 629 (HOWALDTSWERKE-DEUTSCHE WERFT) <br> * Anspruch * <br> --- | 1,5 | |
| A | EP-A-0 062 104 (SIEMENS AG.) <br> * Zusammenfassung * <br> --- | 1-18 | |
| A | DE-A-3 544 786 (KRAUSE G.) <br> * das ganze Dokument * | 1-18 | RECHERCHIERTE SACHGEBIETE (Int. Cl.5 ) |
| | ----- | | G01N |

Der vorliegende Recherchenbericht wurde für alle Patentansprüche erstellt

| Recherchenort | Abschlußdatum der Recherche | Prüfer |
|---|---|---|
| DEN HAAG | 19 DEZEMBER 1991 | KOUZELIS D. |